# EUROPÄISCHE PATENTSCHRIFT

(11) **EP 2 857 772 B1**
(45) Veröffentlichungstag und Bekanntmachung des Hinweises auf die Patenterteilung: **11.12.2019**
(21) Anmeldenummer: 14184209.6
(22) Anmeldetag: 10.09.2014
(51) Int. Cl.: F24F 12/00, F24F 13/20, F24F 7/08, F24F 13/02

(54) **Lüftungsgerät mit Wärmerückgewinnung**
Heat recovery ventilator
Appareil d'aération avec récupération de chaleur

(30) Priorität: 02.10.2013 DE 102013016498
(43) Veröffentlichungstag der Anmeldung: 08.04.2015
(73) Patentinhaber: MAICO Elektroapparate-Fabrik GmbH, 78056 Villingen-Schwenningen (DE)
(72) Erfinder: Kammerer, Stefan, 78120 Furtwangen (DE)
(74) Vertreter: Dietz, Christopher Friedrich

(56) Entgegenhaltungen:
- EP-A2- 2 348 258
- WO-A1-98/06982
- DE-A1- 10 109 753
- FR-A1- 2 942 531
- US-A1- 2002 022 449
- US-A1- 2006 260 332

## Beschreibung

Die Erfindung betrifft ein Lüftungsgerät mit Wärmerückgewinnung, mit einem Gehäuse, in dem ein Wärmetauscher angeordnet ist, über den mittels mindestens eines Gebläses Luft gefördert wird, wobei das Gehäuse eine Vorderwand, eine Rückwand und eine Seitenwand sowie Luftanschlüsse für verschiedene Luftarten, nämlich Zu-, Ab-, Fort- und/oder Außenluft aufweist.

Derartige Lüftungsgeräte sind aus den Dokumenten WO 98/06982, US 2002/0022449 A1 und US 2006/0260332 A1 bekannt. Sie dienen dazu, beispielsweise die Räume einer Wohnung zu belüften. Hierzu wird ein derartiges Lüftungsgerät in der Wohnung installiert, wobei an einem Gehäuse des Lüftungsgeräts vorgesehene Luftanschlüsse mit Luftleitungen verbunden werden. Eine nach außen führende Außenluftleitung wird mit einem Außenluftanschluss des Lüftungsgeräts, eine mit Luftauslass versehene Zuluftleitung an einen Zuluftanschluss des Lüftungsgeräts, eine mit Lufteinlass verbundene Abluftleitung mit einem Abluftanschluss des Lüftungsgeräts und eine zur Außenatmosphäre führende Fortluftleitung mit einem Fortluftanschluss des Lüftungsgeräts verbunden. Viele mit einem derartigen Lüftungsgerät zu belüftende Örtlichkeiten, zum Beispiel Wohnungen, weisen mehrere Abluftbereiche, beispielsweise zwei Abluftbereiche (Küche und Badezimmer mit eventuell angrenzendem Gäste-WC) auf und es sind mehrere Zulufträume vorhanden (zum Beispiel Wohnzimmer, Elternschlafzimmer und Kinderschlafzimmer). Wird nun eine Abluftleitung vom Badezimmer zur Küche verlegt, so befinden sich oft auf beiden Seiten dieser Abluftleitung die Zulufträume, mit der Folge, dass sich Zuluftleitung und Abluftleitung bei ihrem Weg zum Lüftungsgerät überkreuzt. Da diese Leitungen vorzugsweise in einer abgehängten Decke oder unter einer insbesondere im Bereich der Decke der Wohnung installierten Abdeckung untergebracht werden, ergibt der Kreuzungspunkt ein großes Abhängmaß, was unerwünscht ist, da sich hierdurch die nutzbare Raumhöhe verkleinert und/oder die Abdeckung stärker störend in Erscheinung tritt. Alternativ wäre es möglich, dass ein derartiger Kreuzungspunkt mit einer sehr langen Luftleitung umfahren wird, wodurch jedoch der Wirkungsgrad einer derartigen Anlage sinkt. Ferner ist es alternativ möglich, einen so "abgeschnittenen" Zuluftbereich mit Weitwurfdüsen zu erreichen, d.h., ein mit Weitwurfdüse oder mit Weitwurfdüsen versehener Zuluftauslass befindet sich nicht direkt im Bereich des Zuluftraumes, sondern mit Abstand dazu, sodass es notwendig ist, dass der/die aus der Weitwurfdüse beziehungsweise aus den Weitwurfdüsen austretende/n Luftstrahl/Luftstrahlen zunächst eine Entfernung überbrücken, bevor sie in eine gewünschte Zone des Raumes gelangen, um dort die Zuluft einzubringen. Diese Maßnahme erfordert hohe Luftgeschwindigkeiten und verursacht Geräusche und gegebenenfalls auch Zugwirkungen. Überdies sind die aus dem Stand der Technik bekannten Lüftungsgeräte in mehreren Geräteversionen auszubilden, um verschiedene Anschlussvarianten zur Verfügung stellen zu können.

Der Erfindung liegt daher die Aufgabe zugrunde, ein Lüftungsgerät der eingangs genannten Art anzugeben, dass einfach und kostengünstig zu installieren ist, eine Luftleitungskreuzung in der jeweiligen Örtlichkeit vermeidet und überdies die Anzahl von Lüftungsgeräteversionen reduziert.

Diese Aufgabe wird erfindungsgemäß durch ein Lüftungsgerät mit den Merkmalen von Anspruch 1 gelöst. Bevorzugte Ausführungsformen sind in den Unteransprüchen definiert.

Dazu sind mindestens einige der Luftanschlüsse an der Seitenwand derart angeordnet, dass ein Luftanschluss einer ersten Luftart zwischen mindestens zwei Luftanschlüssen einer zweiten Luftart liegt. Durch die Anordnung der Luftanschlüsse an der Seitenwand wird eine möglichst flache Bauform des Lüftungsgeräts bewirkt, sodass es beispielsweise in einer abgehängten Decke untergebracht werden kann. Ferner ist es möglich, die Luftleitungen, die mit dem Lüftungsgerät bei der Montage strömungstechnisch verbunden werden müssen, kreuzungsfrei im Bereich der Örtlichkeit, beispielsweise Wohnung, zu verlegen, da ein Luftanschluss, der eine bestimmte Luftart, nämlich Abluft führt und daher ein Abluftanschluss ist, zwischen mindestens zwei Luftanschlüssen einer zweiten Luftart liegt, nämlich Zuluft, sodass sich also zwischen den beiden Zuluftanschlüssen der Abluftanschluss befindet. Hierdurch lässt sich in der Örtlichkeit der auf der einen Seite des Abluftbereichs liegende Zuluftbereich mit Zuluft versorgen und auch der auf der anderen Seite des Abluftbereichs liegende Zuluftbereich, ohne dass sich die in diese Bereiche führenden Luftleitungen kreuzen. Sie können daher kreuzungsfrei und insbesondere auch möglichst kurz ausgeführt werden. Überdies lässt sich das erfindungsgemäße Lüftungsgerät sowohl für die Geräteversion "links" als auch für die Geräteversion "rechts" verwenden, d.h., beide Ausführungsformen sind in ein und demselben Gerät vereint. Wird einer der beiden Luftanschlüsse, die dieselbe Luftart führen, nicht benötigt, so kann dieser mittels eines Deckels oder dergleichen verschlossen werden.

Nach einer Weiterbildung der Erfindung ist vorgesehen, dass die Seitenwand eine umlaufende Seitenwand, insbesondere eine Flachseite des Gehäuses, ist. "Umlaufende" Seitenwand bedeutet, dass zwischen der Vorderwand und der Rückwand des Gehäuses an dessen Außenperipherie die Seitenwand verläuft, und zwar im Falle eines quaderförmigen Gehäuses durch zwei einander gegenüberliegende Seitenwandabschnitte sowie zwei weitere, einander gegenüberliegende Seitenwandabschnitte, die zu den erstgenannten beiden Seitenwandabschnitte um 90° gedreht verlaufen.

Nach einer Weiterbildung der Erfindung ist vorgesehen, dass die Seitenwand - wie bereits schon angedeutet - mehrere Seitenwandabschnitte aufweist, wobei aneinander angrenzende Seitenwandabschnitte vorzugsweise unter einem oder vorzugsweise unter jeweils einem Winkel zueinander verlaufen. Im Falle des erwähnten quaderförmigen Gehäuses grenzen benachbarte Seitenwandabschnitte unter einem 90°-Winkel aneinander.

Vorzugsweise ist vorgesehen, dass das mindestens eine Gebläse in dem Gehäuse angeordnet ist.

Erfindungsgemäß ist der Luftanschluss für Zuluft ein Zuluftanschluss, der Luftanschluss für Abluft ein Abluftanschluss, der Luftanschluss für Fortluft ein Fortluftanschluss und der Luftanschluss für Außenluft ein Außenluftanschluss.

Eine Weiterbildung der Erfindung sieht vorzugsweise vor, dass das mindestens eine Gebläse, vorzugsweise zwei Gebläse, Luft von dem Abluftanschluss zum Fortluftanschluss - gegebenenfalls unter Passieren des Wärmetauschers - und vom Außenluftanschluss zum Zuluftanschluss - gegebenenfalls unter Passieren des Wärmetauschers - fördert/fördern.

Ferner ist es vorteilhaft, wenn die zumindest einigen der Luftanschlüsse reihenförmig zueinander liegend an der Seitenwand angeordnet sind. Handelt es sich beispielsweise bei dem Gehäuse um das bereits erwähnte quaderförmige Gehäuse und das Lüftungsgerät ist beispielsweise als Deckenflachgerät ausgebildet, so liegen die erwähnten Luftanschlüsse reihenförmig nebeneinander, also auf einer horizontal verlaufenden gedachten Linie.

Eine Weiterbildung der Erfindung sieht vor, dass die zumindest einigen der Luftanschlüsse an demselben Seitenwandabschnitt angeordnet sind. Im erwähnten Beispielsfall des quaderförmigen Gehäuses liegen die genannten Luftanschlüsse demzufolge an ein und derselben Quaderseite.

Eine Weiterbildung der Erfindung sieht vorzugsweise vor, dass zumindest einer der Seitenwandabschnitte zumindest an einem seiner beiden Abschnittsenden abgewinkelt verläuft, wobei der so gebildete abgewinkelte Abschnitt eine Winkelwand ist. Diese Winkelwand gehört zu dem genannten Seitenwandabschnitt.

Vorzugsweise ist vorgesehen, dass zumindest einer der zumindest einigen der Luftanschlüsse an der Winkelwand angeordnet ist.

Eine Weiterbildung der Erfindung sieht vor, dass das Gehäuse im Wesentlichen quaderförmig ausgebildet ist. Hierauf wurde vorstehend schon mehrfach eingegangen.

Vorzugsweise kann das Gehäuse als Flachgehäuse, insbesondere als Flachquadergehäuse, ausgebildet sein. Diese Ausführungsform ist beispielsweise vorteilhaft, wenn das Lüftungsgerät als Deckenflachgerät ausgebildet ist.

Eine Weiterbildung der Erfindung sieht vor, dass der mit zumindest einigen Luftanschlüssen versehene Seitenwandabschnitt einen Flachseitenabschnitt der Flachseite, insbesondere eine Flachstirnseite des Gehäuses, bildet. Die Flachseite verläuft umlaufend und kann sich aus mehreren Flachseitenabschnitten zusammensetzen. Unter "Flachstirnseite" ist eine Seite des Gehäuses zu verstehen, die die Breite des Gehäuses definiert und die kürzer ist als die Längsseite des Gehäuses.

Nach einer Weiterbildung der Erfindung ist vorgesehen, dass durch an den beiden Abschnittsenden von mindestens einem der Seitenwandabschnitte ausgebildeten Winkelwänden das Gehäuse, insbesondere das Flachgehäuse, vorzugsweise das Flachquadergehäuse, einen trapezförmigen Grundrissbereich aufweist. Der verbleibende Grundrissbereich des Gehäuses ist bevorzugt quadratisch oder rechteckig ausgebildet.

Insbesondere ist es vorteilhaft, wenn an den beiden Winkelwänden des Seitenwandabschnitts die beiden Luftanschlüsse der zweiten Luftart angeordnet sind und dass an einem zwischen den beiden Winkelwänden liegenden Seitenwandteil des Seitenwandabschnitts der Luftanschluss mit der ersten Luftart angeordnet ist. Hierdurch nehmen die beiden Luftanschlüsse der zweiten Luftart den Luftanschluss der ersten Luftart zwischen sich auf.

Erfindungsgemäß ist vorgesehen, dass der Luftanschluss der ersten Luftart einen geraden Luftanschlussstutzen aufweist und dass die beiden Luftanschlüsse der zweiten Luftart jeweils einen bogenförmigen und/oder winkelförmigen, vorzugsweise drehbaren oder vorzugsweise in gewünschter Drehwinkelstellung montierbaren Luftanschlussstutzen aufweisen. Hierdurch können die an das Lüftungsgerät anzuschließenden Luftleitungen aus entsprechend wählbaren Richtungen dem Gehäuse zugeführt werden.

Nach einer Weiterbildung der Erfindung ist vorgesehen, dass die anschlussseitigen Stutzenmittelachsen von zumindest einigen der Luftanschlussstutzen parallel oder etwa parallel zueinander verlaufen. Dies ermöglicht eine Zuführung der verschiedenen Luftleitungen in Parallelanordnung. Sollte zum Beispiel eine der Stutzenmittelachsen nicht parallel zu einer anderen verlaufen, so lässt sich der Parallelverlauf durch einen bogenförmigen und/oder winkelförmigen Luftanschlussstutzen herbeiführen.

Erfindungsgemäß ist der Luftanschluss der ersten Luftart ein Abluftanschluss und erfindungsgemäß sind die Luftanschlüsse der zweiten Luftart Zuluftanschlüsse. Wie vorstehend bereits erläutert ist es dann möglich, beidseitig eines Abluftbereichs einer Örtlichkeit jeweils Zuluft zuzuführen, ohne dass es zu Luftleitungskreuzungen kommt.

Erfindungsgemäß ist vorgesehen, dass im Gehäuse ein über den Wärmetauscher führender erster Luftweg ausgebildet ist, der den Abluftanschluss mit dem Fortluftanschluss verbindet und dass in dem Gehäuse ein über den Wärmetauscher führender zweiter Luftweg ausgebildet ist, der den Außenluftanschluss mit einem der Zuluftanschlüsse verbindet, wobei ein im Gehäuse liegender Luftabzweig des zweiten Luftwegs zu dem anderen der Zuluftanschlüsse führt. Auf diese Art und Weise werden zwei Zuluftanschlüsse ausgebildet, die im Gehäuse miteinander lufttechnisch verbunden sind. Dies erfolgt durch den erwähnten Luftabzweig, der vorzugsweise auf der Seite des Wärmetauschers liegt, die auch den Abluftanschluss aufweist.

Nach einer Weiterbildung der Erfindung ist vorgesehen, dass der Wärmetauscher einen Wärmetausch zwischen den beiden Luftwegen vornimmt.

Erfindungsgemäß ist vorgesehen, dass der Luftabzweig einen den ersten Luftweg kreuzenden, insbesondere untertunnelnden Luftkanal aufweist. Demzufolge ist eine Kreuzung in das Gehäuse des Lüftungsgeräts gelegt, wobei dies jedoch ohne eine Vergrößerung der Gehäuseabmessungen, insbesondere ohne eine Vergrößerung der Höhe des Gehäuses möglich ist, da die erforderliche Breite des Lüftungsgeräts entsprechend breite Luftwege zulässt, sodass eine Verringerung in der Höhe der Luftwege aufgrund der erwähnten Kreuzung durch eine entsprechend groß gewählte Breite der Luftwege nicht zu Querschnittseinbußen führt, die einen merklichen Druckverlust mit sich bringen.

Ferner ist es vorteilhaft, wenn zur wählbaren Umgehung des Wärmetauschers der erste oder der zweite Luftweg mit einem den Wärmetauscher umgehenden Bypass versehen ist. Durch den Bypass lässt sich im Zuge der Betriebsführung des Lüftungsgeräts der Wärmetauscher umgehen, wenn dies gewünscht oder vorteilhaft ist.

Ferner ist bevorzugt vorgesehen, dass der Bypass einen den ersten Luftweg kreuzenden, insbesondere untertunnelnden Bypass-Luftweg aufweist. Auch hier wird somit eine Kreuzung realisiert, was jedoch keine Nachteile mit sich bringt, wie bereits in entsprechender Weise zu den sich im Gehäuse kreuzenden Luftwegen erwähnt wurde. Im Gehäuse ist daher eine Kreuzung auch ohne Druckverlust oder ohne merklichen Druckverlust realisierbar.

Schließlich ist es besonders vorteilhaft, wenn der Luftkanal und der Bypass-Luftweg als gemeinsame Luftführung, insbesondere gemeinsame Untertunnelung des ersten Luftwegs, ausgebildet ist. Die beiden, vorstehend erwähnten Kreuzungen sind somit zu einer gemeinsamen Kreuzung zusammengefasst, was bautechnische und platztechnische Vorteile bietet.

Die Zeichnungen veranschaulichen die Erfindung anhand von Ausführungsbeispielen, und zwar zeigt:
- Figur 1: einen Grundriss einer Örtlichkeit (Wohnung) mit Andeutung eines Einbaukonzepts eines Lüftungsgeräts,
- Figur 2: eine der Figur 1 entsprechende Ansicht, mit Darstellung des Lüftungsgeräts,
- Figur 3: eine perspektivische Draufsicht auf das geöffnete Lüftungsgerät,
- Figur 4: ein weiteres Ausführungsbeispiel eines Lüftungsgeräts,
- Figur 5: ein weiteres Ausführungsbeispiel eines Lüftungsgeräts,
- Figur 6: eine Längsschnittansicht eines Bereichs des Lüftungsgeräts der Figur 5,
- Figur 7: ein Anschlusskonzept des Lüftungsgeräts,
- Figur 8: ein weiteres Anschlusskonzept des Lüftungsgeräts,
- Figur 9: ein weiteres Anschlusskonzept des Lüftungsgeräts und
- Figur 10: ein weiteres Anschlusskonzept des Lüftungsgeräts.

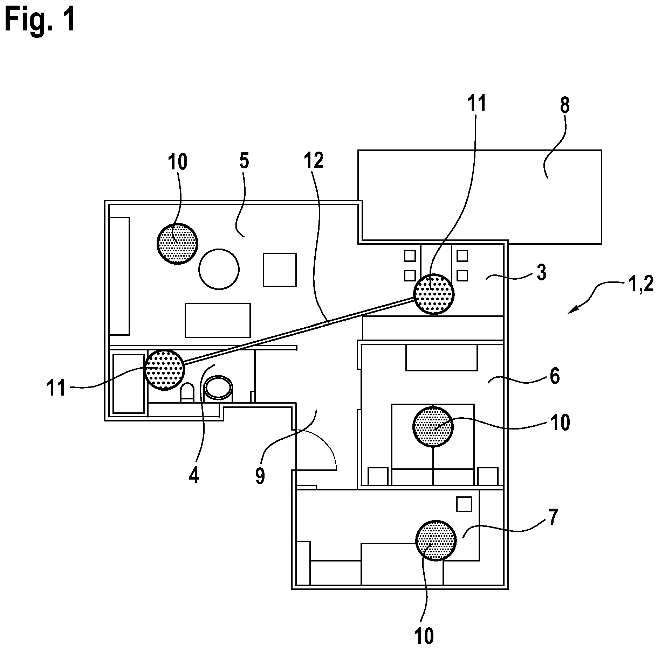

Die Figur 1 zeigt den Grundriss einer Örtlichkeit 1, nämlich einer Wohnung 2, die unter anderem eine Essküche 3, ein Bad 4 (mit WC), ein Wohnzimmer 5, ein Schlafzimmer 6 und ein Kinderzimmer 7 sowie einen Balkon 8 und eine Diele 9 aufweist.

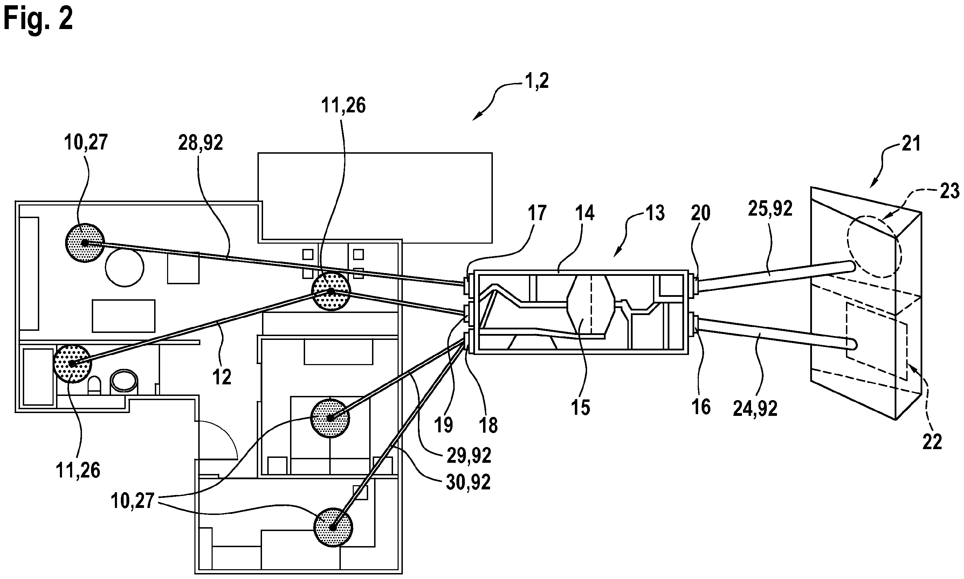

Der Wohnung 2 ist ein in der Figur 1 nicht dargestelltes Lüftungsgerät 13 (Figur 2) zugeordnet. Es ist vorzugsweise an der Wohnungsdecke in einem geeigneten Bereich installiert. In der Wohnung 2 sind Zuluftbereiche 10 sowie Abluftbereiche 11 definiert, d.h., das Lüftungsgerät 13 bringt Zuluft in die Zuluftbereiche 10 ein und führt Abluft aus den Abluftbereichen 11 ab. Es ist erkennbar, dass die beiden Abluftbereiche 11 in der Essküche 3 und im Bad 4 mittels einer Abluftleitung 12 miteinander verbunden sind. Würde man nun die Zuluftbereiche 10 mittels einer Zuluftleitung verbinden, die möglichst kurz ausgebildet ist, so käme es zu einer Kreuzung dieser Zuluftleitung mit der Abluftleitung. Der Kreuzungspunkt dieser beiden Leitungen ist erfindungsgemäß in der Wohnung 2 zu vermeiden.

Gemäß Figur 2 ist zur Vermeidung des erwähnten Kreuzungspunkts das Lüftungsgerät 13 dargestellt, das ein Gehäuse 14 aufweist. In dem Gehäuse 14 ist ein Wärmetauscher 15 angeordnet. Das Lüftungsgerät 13 weist an seinem Gehäuse 14 mehrere Luftanschlüsse 90, nämlich einen Außenluftanschluss 16, zwei Zuluftanschlüsse 17 und 18, einen Abluftanschluss 19 sowie einen Fortluftanschluss 20 auf. An einer Außenfassade der Wohnung 2 ist eine lufttechnische Wandeinrichtung 21 installiert, die eine Außenluftöffnung 22 sowie eine Fortluftöffnung 23 aufweist. Die Außenluftöffnung 22 ist mittels einer Außenluftleitung 24 mit dem Außenluftanschluss 16 des Lüftungsgeräts 13 verbunden. Der Fortluftanschluss 20 ist mittels einer Fortluftleitung 25 mit der Fortluftöffnung 23 verbunden. Die bereits erwähnte Abluftleitung 12, die die beiden Abluftbereiche 11 verbindet, ist an den Abluftanschluss 19 des Lüftungsgeräts 13 angeschlossen. In den Abluftbereichen 11 befinden sich entsprechende, mit der Luftleitung 12 verbundene Lufteinlässe 26. Den Zuluftbereichen 10 zugeordnete Luftauslässe 27 sind über eine Zuluftleitung 28 mit dem Luftanschluss 17 sowie über weitere Zuluftleitungen 29 und 30 mit dem weiteren Zuluftanschluss 18 verbunden. Bei den vorstehend genannten einzelnen Verbindungen handelt es sich jeweils um lufttechnische Verbindungen, d.h., es kann dort eine Luftströmung zu- beziehungsweise abgeführt werden. Die Abluftleitung 12, die Außenluftleitung 24, die Fortluftleitung 25 und die Zuluftleitungen 28, 29 und 30 sind allgemein als Luftleitungen 92 zu bezeichnen.

Wie aus der Figur 2 zu erkennen ist, verhindern die beiden Zuluftanschlüsse 17 und 18 des Lüftungsgeräts 13 eine Leitungskreuzung zwischen der Abluftleitung 12 und den Zuluftleitungen 28, 29 und 30, da einerseits mehr als ein Zuluftanschluss 17, 18 am erfindungsgemäßen Lüftungsgerät 13 vorgesehen ist und ferner zwischen den beiden Zuluftanschlüssen 17 und 18 der Abluftanschluss 19 liegt.

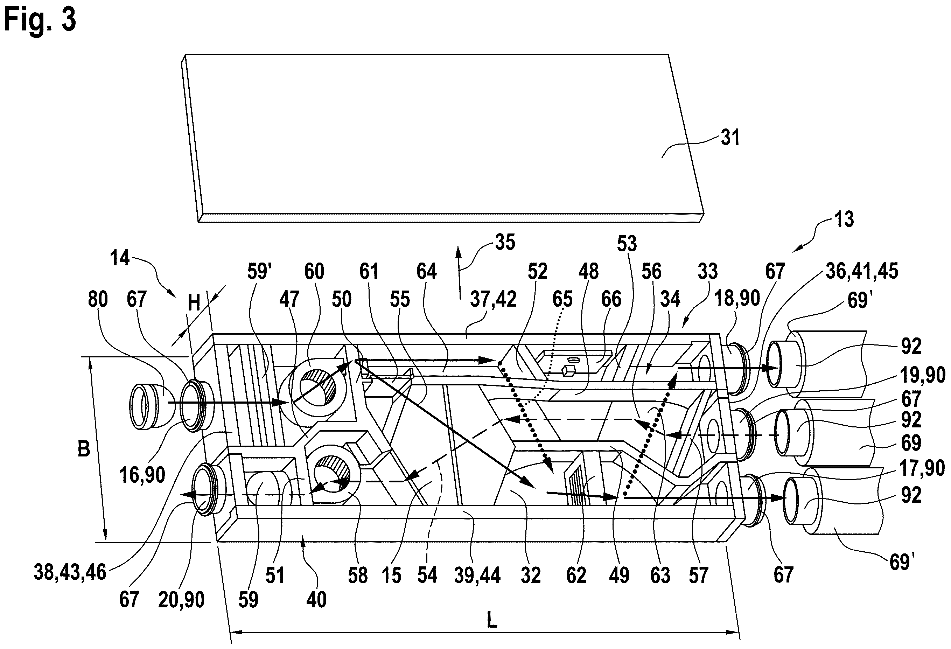

Der konkrete Aufbau des Lüftungsgeräts 13 ist in den Figuren 3 bis 6 näher erläutert.

Die Figur 3 zeigt im Wesentlichen schematisch den Aufbau des Lüftungsgeräts 13. Das Gehäuse 14 weist eine Vorderwand 31, eine Rückwand 32 sowie eine umlaufende Seitenwand 33 auf. Um in das Innere 34 des Gehäuses 14 hineinschauen zu können, ist in der Figur 3 die Vorderwand 31 abgenommen und in Richtung des Pfeiles 35 verschoben dargestellt. Die Seitenwand 33 weist mehrere Seitwandabschnitte 36, 37, 38 und 39 auf, wobei aneinander angrenzende Seitenwandabschnitte 36 bis 39 unter einem 90°-Winkel zueinander verlaufen. Das Gehäuse 14 ist quaderförmig ausgebildet, es bildet ein Flachgehäuse, insbesondere ein Flachquadergehäuse, wobei die Flachseite 40 des Gehäuses 14 durch die Seitenwand 33 definiert ist. Das Gehäuse 14 weist eine Länge L ein Breite B sowie eine Höhe H (die auch die Dicke der Vorderwand 31 mit umfasst) auf. Die (umlaufende) Flachseite 40 ist von mehreren Flachseitenabschnitten 41, 42, 43 und 44 gebildet, wobei die beiden der Breite B zugeordneten Flachseitenabschnitte 41 und 43 Flachstirnseiten 45 und 46 des Gehäuses 14 bilden.

Im Innern 34 des Gehäuses 14 des Lüftungsgeräts 13 befinden sich mehrere Trennwände, nämlich eine gewinkelt verlaufende Trennwand 47, die vom Seitenwandabschnitt 38 bis zum Wärmetauscher 15 verläuft sowie zwei Trennwände 48 und 49, die vom Wärmetauscher 15 bis zu dem Seitenwandabschnitt 36 angenähert parallel zueinander verlaufen. Ferner sind Trennwände 50 und 51 vorhanden, die von dem Seitenwandabschnitt 37 beziehungsweise dem Seitenwandabschnitt 39 bis zur Trennwand 47 verlaufen. Überdies sind zwei Trennwände 52 und 53 vorgesehen, die von dem Seitenwandabschnitt 37 bis zur Trennwand 48 verlaufen. Aufgrund der Trennwände 47, 48 und 49 sowie des Wärmetauschers 15 und der Wände des Gehäuses 14 werden ein erster Luftweg 54 sowie ein zweiter Luftweg 55 im Innern 34 des Gehäuses 14 ausgebildet. Der erste Luftweg 54 ist mit gestrichelter Pfeillinie in Figur 3 dargestellt und führt vom Abluftanschluss 19 über den Wärmetauscher 15 zum Fortluftanschluss 20. Der zweite Luftweg 55 ist mit durchgezogener Linie dargestellten Pfeilen in Figur 3 dargestellt und führt vom Außenluftanschluss 16 über den Wärmetauscher 15 zu dem Zuluftanschluss 17, wobei von diesem zweiten Luftweg 55 ein Luftabzweig 56 abgeht, der mit gepunktetem Pfeil dargestellt ist und zum Zuluftanschluss 18 führt. Im Einzelnen ergibt sich folgendes: Entlang des ersten Luftwegs 54 folgt - in Luftströmungsrichtung betrachtet - dem Abluftanschluss 19 ein Luftfilter 57, dann der Wärmetauscher 15, anschließend ein Gebläse 58, dann eine Kaltrauchsperre 59 und dann der Fortluftanschluss 20. Ausgehend von dem Außenluftanschluss 16 befinden sich - in Luftströmungsrichtung betrachtet - im zweiten Luftweg 55 eine Kaltrauchsperre 80 (in aus dem Außenluftanschluss 16 entnommener Stellung gezeigt), ein mehrstufiger Luftfilter 59', ein Gebläse 60, eine Bypassklappe 61, der Wärmetauscher 15, eine Heizung 62 und dann der Zuluftanschluss 17. Der Luftabzweig 56 weist einen den ersten Luftweg 54 kreuzenden, nämlich untertunnelnden Luftkanal 63 auf. Die Trennwand 53 sorgt dafür, dass die vom Luftkanal 63 kommende Luft nicht in ungewünschte Bereiche des Gehäuses 14 einströmt, sondern zum Zuluftanschluss 18 gelangt. Die erwähnte Bypassklappe 61 gehört einem Bypass 64 an, der den Wärmetauscher 15 in Abhängigkeit von der Stellung der Bypassklappe 61 umgeht. Der Bypassluftweg ist in der Figur 3 mittels eines mit durchgezogener Linie dargestellten Pfeils und eines mit gepunkteter Linie dargestellten Pfeils kenntlich gemacht, wobei der Bypass 64 einen den ersten Luftweg 54 kreuzenden, nämlich untertunnelnden Bypass-Luftweg 65 aufweist. Die Trennwand 52 stellt eine Begrenzungswand des Bypasses 64 dar. Da die beiden Trennwände 52 und 53 mit Abstand zueinander liegen, ist zwischen ihnen - begrenzt von einem Bereich des Seitenwandabschnitts 37 und einem Bereich der Trennwand 48 sowie abgedeckt von Abschnitten der Vorderwand 31 und Rückwand 32 ein Elektronikfach 66 ausgebildet, in dem eine Steuer- und/oder Regelelektronik des Lüftungsgeräts 13 untergebracht ist, mit der die Betriebsführung des Lüftungsgeräts 13 erfolgt. Der Wärmetauscher 15 führt einen Wärmeaustausch zwischen Luftströmen durch, die die beiden Luftwege 54 und 55 durchströmen.

Der Außenluftanschluss 16, der Zuluftanschluss 17, der weitere Zuluftanschluss 18, der Abluftanschluss 19 und der Fortluftanschluss 20 weist jeweils einen gerade ausgebildeten Luftanschlussstutzen 67 auf, der mit einer Dichtung versehen ist. Auf die Luftanschlussstutzen 67 lassen sich dichtend die Luftleitungen 92 (Figur 3) aufstecken, die mit Wärmeisolierungen 69' versehen sind. Bei den Luftleitungen 92 handelt es sich - gemäß Figur 2 - um die Abluftleitung 12, die Außenluftleitung 24, die Fortluftleitung 25 und die Zuluftleitungen 28, 29 und 30. Da gemäß Figur 2 zwei Zuluftleitungen 29 und 30 an den Zuluftanschluss 18 angeschlossen sind, ist es erforderlich, hier eine Verzweigung vorzusehen, welche dem Fachmann bekannt ist und daher hier nicht näher beschrieben werden muss.

Aus den Figuren 2 und 3 geht deutlich hervor, dass an dem Flachseitenabschnitt 43 zwei Anschlüsse nebeneinander liegend angeordnet sind, nämlich der Außenluftanschluss 16 und der Fortluftanschluss 20. An dem Seitenwandabschnitt 36, insbesondere dem Flachseitenabschnitt 41, sind Luftanschlüsse 90 derart vorgesehen, dass ein Luftanschluss 90 einer Luftart zwischen mindestens zwei Luftanschlüssen 90 einer anderen, jedoch zueinander derselben Luftart liegt. Bei dem Luftanschluss 90 einer Luftart handelt es sich um den Abluftanschluss 19, wobei die Luftart Abluft ist. Dieser Abluftanschluss 19 liegt zwischen den beiden Zuluftanschlüssen 17, 18, also Luftanschlüssen 90 der anderen Luftart, nämlich Zuluft. Diese beiden Luftanschlüsse 90 führen demzufolge dieselbe Luftart, nämlich Zuluft.

Im Betrieb des Lüftungsgeräts 13 arbeiten die beiden Gebläse 58 und 60, sodass am Außenluftanschluss 16 Außenluft angesaugt wird, die den Luftfilter 59' passiert und über das Gebläse 60 zum Wärmetauscher 15 gelangt. Von dort aus wird die Heizung 62 durchsetzt (die wahlweise in Betrieb sein kann) und von dort gelangt die Außenluft zu den beiden Zuluftanschlüssen 17 und 18. In Abhängigkeit der Stellung der Bypassklappe 61 ist es möglich, den Wärmetauscher 15 zu umgehen oder teilweise zu umgehen, d.h., es tritt der Bypass 64 mehr oder weniger in Funktion. Vom Abluftanschluss 19 gelangt Abluft über den Luftfilter 57 und über den Wärmetauscher 15 sowie über das Gebläse 58 zur Kaltrauchsperre 59 und von dort zum Fortluftanschluss 20. Der Wärmetauscher 15 sorgt für einen Wärmetausch zwischen den beiden vorstehend genannten Luftströmungen in den Luftwegen 54 und 55, wobei die Wärmetauschwirkung in Abhängigkeit von der Funktion des Bypasses 64 steuerbar ist.

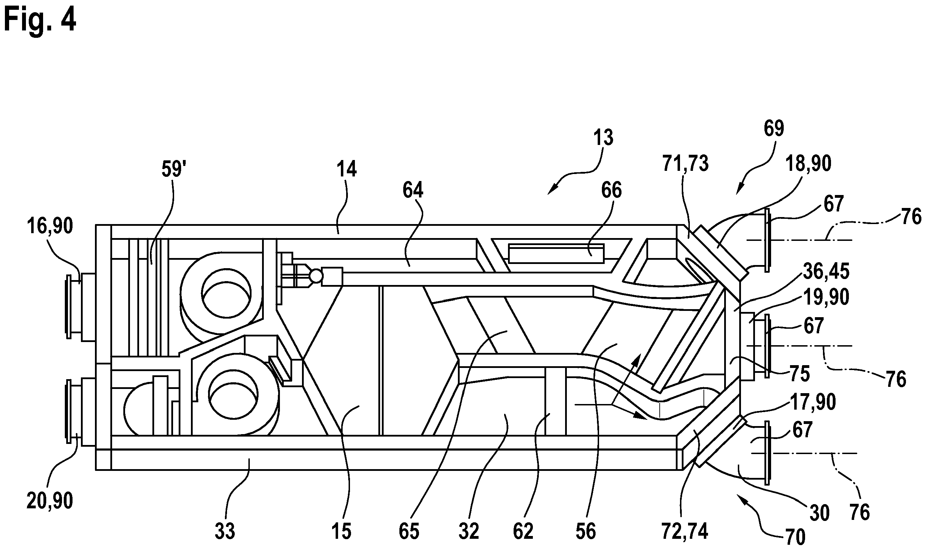

Die Figur 4 zeigt ein weiteres Ausführungsbeispiel eines Lüftungsgeräts 13, das im Wesentlichen der Ausbildung des Lüftungsgeräts der Figur 3 entspricht, sodass nachstehend lediglich auf die Unterschiede eingegangen werden soll. Im Gegensatz zum Ausführungsbeispiel der Figur 3 ist im Ausführungsbeispiel der Figur 4 der Seitenwandabschnitt 36 nicht geradlinig, sondern gewinkelt ausgebildet. Mithin weist der Seitenwandabschnitt 36 beim Ausführungsbeispiel der Figur 4 an beiden seiner Abschnittsenden 69 und 70 einen winkelförmigen Verlauf auf, wodurch abgewinkelte Abschnitte 71 und 72 ausgebildet werden, die jeweils eine Winkelwand 73 und 74 bilden. Die Anordnung ist nun so getroffen, dass sich der Zuluftanschluss 17 an der Winkelwand 74 und der Zuluftanschluss 18 an der Winkelwand 73 befindet. Mithin sind an den beiden Winkelwänden 73 und 74 des Seitenwandabschnitts 36 die beiden Luftanschlüsse 90 der anderen Luftart, nämlich der Zuluft, angeordnet, wobei sich zwischen den beiden Winkelwänden 73 und 74 ein Seitenwandteil 75 des Seitenwandabschnitts 36 der Luftanschluss 90 der anderen Luftart, nämlich der Abluft, befindet.

Im Ausführungsbeispiel der Figur 3 sind nur gerade Luftanschlussstutzen 67 vorgesehen. Bei einem Ausführungsbeispiel der Figur 4 sind für die beiden Zuluftanschlüsse 17 und 18 bogenförmige Luftanschlussstutzen 67 vorgesehen, die in der Montageposition gemäß Figur 4 derart ausgebildet sind, dass alle auf der rechten Seite der Figur 4 liegenden Luftanschlüsse 90 (also einschließlich des geraden Luftanschlussstutzens 67 für die Abluft) eine Stutzenmittelachse 76 gleicher Richtung aufweisen, d.h., die drei Stutzenmittelachsen 76 verlaufen parallel zueinander.

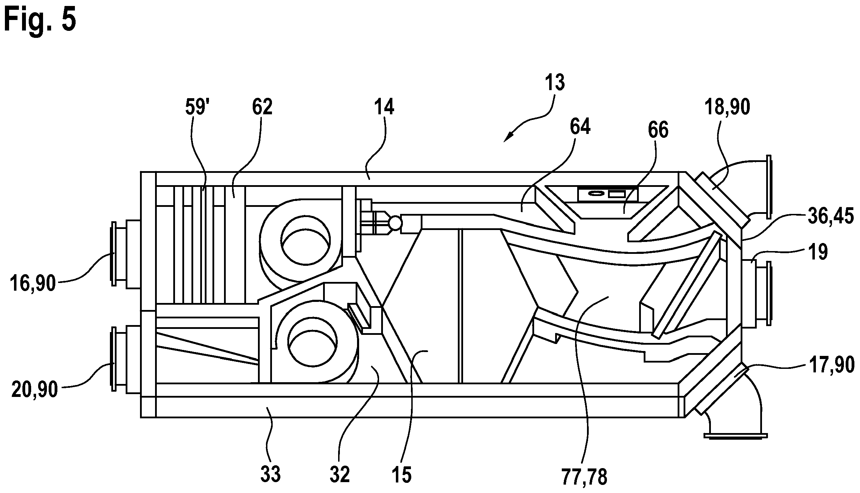

In Abweichung zum Ausführungsbeispiel der Figur 4 weist das Ausführungsbeispiel des Lüftungsgeräts 13 der Figur 5 einen andersartig montierten, gebogenen Luftanschlussstutzen 67 in Bezug auf den Zuluftanschluss 17 auf. Bei der Montage wird sich der Monteur die Luftanschlussstutzen 67 entsprechend einer einfachen Leitungsführung und/oder durch die baulichen Verhältnisse bedingten Ausrichtung einstellen.

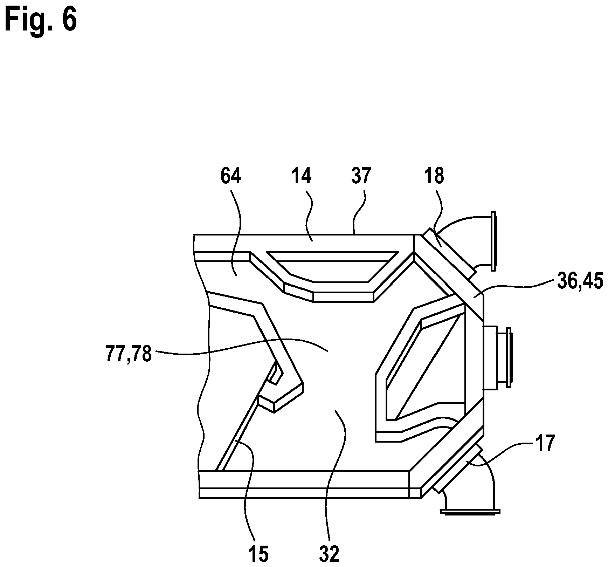

Beim Ausführungsbeispiel der Figur 5 ist im Unterschied zu den Ausführungsbeispielen der Figuren 3 und 4 vorgesehen, dass der Luftkanal 63 und der Bypass-Luftweg 65 als gemeinsame Luftführung 77 ausgebildet ist, insbesondere als gemeinsame Untertunnelung 78 des ersten Luftwegs 54. Die Figur 6 verdeutlicht die Ausbildung der Untertunnelung 78. Sie ist im Längsschnitt etwa Y-förmig mit mehreren Armen ausgestaltet, wobei ein erster Arm zum Bypass 64, ein zweiter Arm zum Zuluftanschluss 18 und ein dritter Arm zum Zuluftanschluss 17 (und natürlich auch zum Wärmetauscher 15) führt. Zwischen dem ersten Arm und dem zweiten Arm ist ein bis zum Seitenwandabschnitt 37 reichender Raum ausgebildet, der der Aufnahme von Bauteilen des Lüftungsgeräts 13 dient. Dieser Raum ist insbesondere als Elektronikfach 66 ausgebildet, d.h., er nimmt die Steuer- und/oder Regelelektronik des Lüftungsgeräts 13 auf. Ferner ist im Ausführungsbeispiel der Figur 5 die Heizung 62 nicht zwischen dem Seitenwandabschnitt 39 und der Trennwand 49 angeordnet (Figuren 3 und 4), sondern zwischen der Trennwand 47 und dem Seitenwandabschnitt 37, und zwar zwischen Gebläse 60 und Luftfilter 59'.

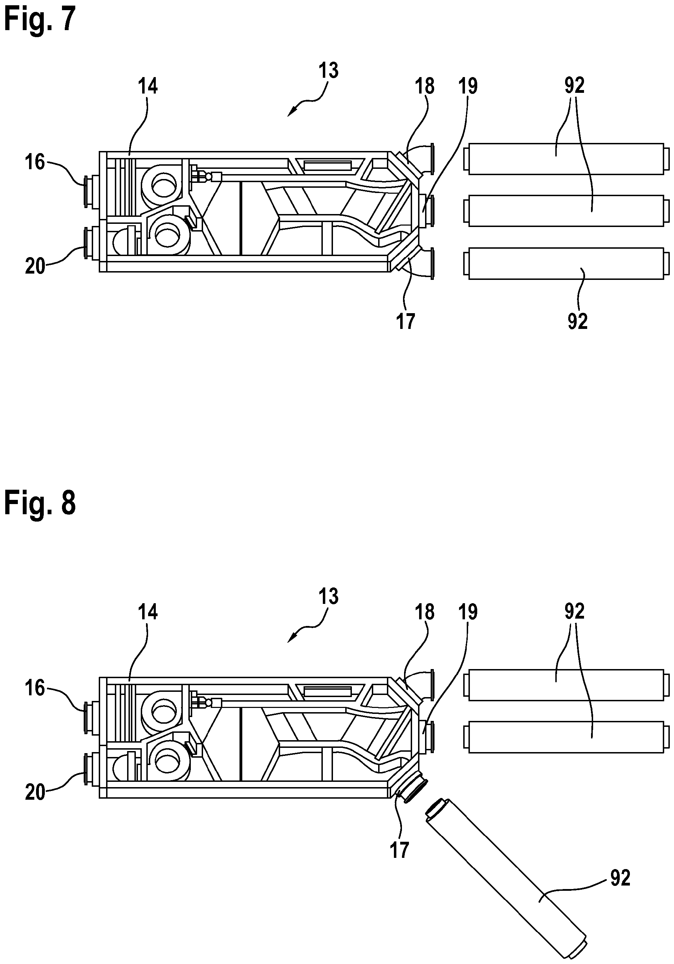

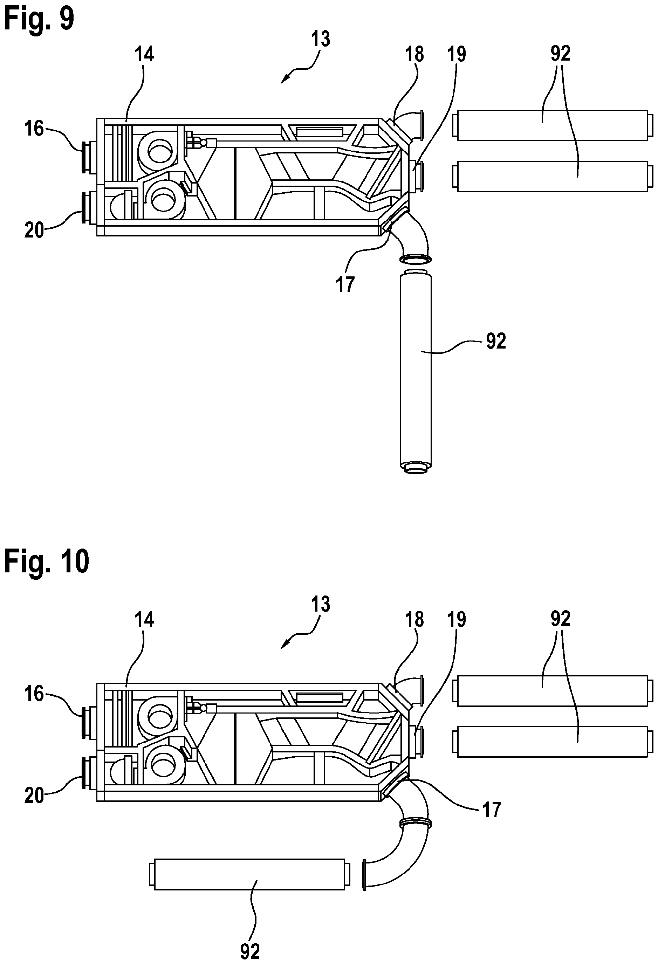

Die Figuren 7 bis 10 zeigen verschiedene Verrohrungsanordnungen, wobei je nach Ausbildung des Luftanschlussstutzens 67 und Ausrichtung des Luftanschlussstutzens 67 unterschiedliche Möglichkeiten bestehen, die an das Lüftungsgerät 13 anzuschließenden Luftleitungen 92 anzuordnen.

## Patentansprüche

1. Lüftungsgerät mit Wärmerückgewinnung, mit einem Gehäuse (14), in dem ein Wärmetauscher (15) angeordnet ist, über den mittels mindestens eines im Gehäuse (14) angeordneten Gebläses (58,60) Luft gefördert wird, wobei das Gehäuse (14) eine Vorderwand (31), eine Rückwand (32) und eine Seitenwand (33) sowie Luftanschlüsse (90) für verschiedene Luftarten, nämlich Zu-, Ab-, Fort- und Außenluft aufweist, der Luftanschluss (90) für die Zuluft ein Zuluftanschluss (17,18), der Luftanschluss (90) für die Abluft ein Abluftanschluss (19), der Luftanschluss (90) für die Fortluft ein Fortluftanschluss (20) und der Luftanschluss (90) für die Außenluft ein Außenluftanschluss (16) ist, zumindest einige der Luftanschlüsse (90) an der Seitenwand (33) derart angeordnet sind, dass ein Luftanschluss (90) einer ersten Luftart zwischen mindestens zwei Luftanschlüssen (90) einer zweiten Luftart liegt, wobei der Luftanschluss (90) der ersten Luftart der Abluftanschluss (19) ist und die Luftanschlüsse (90) der zweiten Luftart die Zuluftanschlüsse (17,18) sind, der Luftanschluss (90) der ersten Luftart einen geraden Luftanschlussstutzen (67) aufweist und die beiden Luftanschlüsse (90) der zweiten Luftart jeweils einen bogenförmigen oder winkelförmigen, drehbaren oder in gewünschter Drehwinkelstellung montierbaren Luftanschlussstutzen (67) aufweisen, im Gehäuse (14) ein über den Wärmetauscher (15) führender erster Luftweg (54) ausgebildet ist, der den Abluftanschluss (19) mit dem Fortluftanschluss (20) verbindet, und wobei in dem Gehäuse (14) ein über den Wärmetauscher (15) führender zweiter Luftweg (55) ausgebildet ist, der den Außenluftanschluss (16) mit einem der Zuluftanschlüsse (17,18) verbindet, wobei ein im Gehäuse (14) liegender Luftabzweig (56) des zweiten Luftweges (55) zu dem anderen der Zuluftanschlüsse (18,17) führt, und der Luftabzweig (56) einen den ersten Luftweg (54) kreuzenden Luftkanal (63) aufweist.

2. Lüftungsgerät nach Anspruch 1, **dadurch gekennzeichnet, dass** die Seitenwand (33) eine umlaufende Seitenwand (33), insbesondere eine Flachseite (40) des Gehäuses (14), ist.

3. Lüftungsgerät nach einem der vorhergehenden Ansprüche, **dadurch gekennzeichnet, dass** die Seitenwand (33) mehrere Seitenwandabschnitte (36,37,38,39) aufweist, wobei aneinander angrenzende Seitenwandabschnitte (36,37,38,39) vorzugsweise unter einem oder vorzugsweise unter jeweils einem Winkel zueinander verlaufen.

4. Lüftungsgerät nach einem der vorhergehenden Ansprüche, **dadurch gekennzeichnet, dass** das mindestens eine Gebläse (58,60) in dem Gehäuse (14) angeordnet ist.

5. Lüftungsgerät nach einem der vorhergehenden Ansprüche, **dadurch gekennzeichnet, dass** das mindestens eine Gebläse (58,60), vorzugsweise zwei Gebläse (58,60), Luft von dem Abluftanschluss (19) zum Fortluftanschluss (20) - gegebenenfalls unter Passieren des Wärmetauschers (15) - und vom Außenluftanschluss (16) zum Zuluftanschluss (17,18) - gegebenenfalls unter Passieren des Wärmetauschers (15) - fördert/fördern.

6. Lüftungsgerät nach einem der vorhergehenden Ansprüche, **dadurch gekennzeichnet, dass** die zumindest einigen der Luftanschlüsse (90) reihenförmig zueinander liegend an der Seitenwand (33) angeordnet sind.

7. Lüftungsgerät wenigstens nach Anspruch 3, **dadurch gekennzeichnet, dass** die zumindest einigen der Luftanschlüsse (90) an demselben Seitenwandabschnitt (36,37,38,39) angeordnet sind.

8. Lüftungsgerät wenigstens nach Anspruch 3, **dadurch gekennzeichnet, dass** zumindest einer der Seitenwandabschnitte (36,37,38,39) zumindest an einem seiner beiden Abschnittsenden (69,70) abgewinkelt verläuft, wobei der so gebildete abgewinkelte Abschnitt (71,72) eine Winkelwand (73,74) ist.

9. Lüftungsgerät nach Anspruch 8, **dadurch gekennzeichnet, dass** zumindest einer der zumindest einigen der Luftanschlüsse (90) an der Winkelwand (73,74) angeordnet ist.

10. Lüftungsgerät nach einem der vorhergehenden Ansprüche, **dadurch gekennzeichnet, dass** das Gehäuse (14) im Wesentlichen quaderförmig ausgebildet ist.

11. Lüftungsgerät nach einem der vorhergehenden Ansprüche, **dadurch gekennzeichnet, dass** das Gehäuse (14) ein Flachgehäuse, insbesondere ein Flachquadergehäuse, ist.

12. Lüftungsgerät wenigstens nach Anspruch 3, **dadurch gekennzeichnet, dass** der mit zumindest einigen Luftanschlüssen (90) versehene Seitenwandabschnitt (36,37,38,39) einen Flachseitenabschnitt (41,42,43,44) der Flachseite (40), insbesondere eine Flachstirnseite (45,46) des Gehäuses (14), bildet.

13. Lüftungsgerät wenigstens nach Anspruch 3, **dadurch gekennzeichnet, dass** durch an den beiden Abschnittsenden (69,70) von mindestens einem der Seitenwandabschnitte (36,37,38,39) ausgebildeten Winkelwänden (73,74) das Gehäuse (14), insbesondere das Flachgehäuse, vorzugsweise das Flachquadergehäuse, einen trapezförmigen Grundrissbereich aufweist.

14. Lüftungsgerät nach Anspruch 13 **dadurch gekennzeichnet, dass** an den beiden Winkelwänden (73,74) des Seitenwandabschnitts (36,37,38,39) die beiden Luftanschlüsse (90) der anderen Luftart angeordnet sind und dass an einem zwischen den beiden Winkelwänden (73,74) liegenden Seitenwandteil (75) des Seitenwandabschnitts (36,37,38,39) der Luftanschluss (90) der einen Luftart angeordnet ist.

15. Lüftungsgerät nach einem der vorhergehenden Ansprüche, **dadurch gekennzeichnet, dass** die anschlussseitigen Stutzenmittelachsen (76) von zumindest einigen der Luftanschlussstutzen (67) parallel oder etwa parallel zueinander verlaufen.

16. Lüftungsgerät nach einem der vorhergehenden Ansprüche, **dadurch gekennzeichnet, dass** der Wärmetauscher (15) einen Wärmetausch zwischen den beiden Luftwegen (54,55) vornimmt.

17. Lüftungsgerät nach einem der vorhergehenden Ansprüche, **dadurch gekennzeichnet, dass** zur wählbaren Umgehung des Wärmetauschers (15) der erste oder der zweite Luftweg (54,55) mit einem den Wärmetauscher (15) umgehenden Bypass (64) versehen ist.

18. Lüftungsgerät nach Anspruch 17, **dadurch gekennzeichnet, dass** der Bypass (64) einen den ersten Luftweg (54) kreuzenden, insbesondere untertunnelnden Bypass-Luftweg (65) aufweist.

19. Lüftungsgerät nach Anspruch 18, **dadurch gekennzeichnet, dass** der Luftkanal (63) und der Bypass-Luftweg (65) als gemeinsame Luftführung (77), insbesondere gemeinsame Untertunnelung (78) des ersten Luftwegs (54), ausgebildet sind.

## Claims

1. The ventilation device with heat recovery, with a housing (14), in which a heat exchanger (15) is arranged via which air is conveyed by means of at least one blower (58, 60) arranged in the housing (14), wherein the housing (14) has a front wall (31), a back wall (32) and a side wall (33), as well as air connections (90) for different types of air, i.e. ingoing air, discharge air, outgoing air and outside air, the air connection (90) for ingoing air being an ingoing air connection (17, 18), the air connection (90) for discharge air being a discharge air connection (19), the air connection (90) for outgoing air being an outgoing air connection (20) and the air connection (90) for outside air being an outside air connection (16), at least some of the air connections (90) on the side wall (33) being arranged such that an air connection (90) of a first type of air is situated between at least two air connections (90) of a second type of air, wherein the air connection (90) of the first type of air is the discharge air connection (19) and the air connections (90) of the second type of air are the ingoing air connections (17, 18), the air connection (90) of the first type of air has a straight air connection piece (67) and the two air connections (90) of the second type of air respectively have an arcuate or angled air connection piece (67) that can be rotated or mounted in a desired angular position, wherein a first air pathway (54) that leads through the heat exchanger (15) and connects the discharge air connection (19) with the outgoing air connection (20) is formed in the housing (14), and wherein a second air pathway (55) that leads through the heat exchanger (15) and connects the outside air connection (16) with one of the ingoing air connections (17, 18) is formed in the housing (14), wherein an air junction (56) of the second air pathway (55) that is situated in the housing (14) leads to the other one of the ingoing air connections (18, 17), and the air junction (56) has an air channel (63) that crosses the first air pathway (54).

2. The ventilation device according to claim 1, **characterised in that** the side wall (33) is a circumferential side wall (33), in particular a flat side (40) of the housing (14).

3. The ventilation device according to any one of the preceding claims, **characterised in that** the side wall (33) has multiple side wall portions (36, 37, 38, 39), wherein mutually contiguous side wall portions (36, 37, 38, 39) preferably extend at an angle to one another, or preferably at a respective angle to one another.

4. The ventilation device according to any one of the preceding claims, **characterised in that** the at least one blower (58, 60) is arranged in the housing (14).

5. The ventilation device according to any one of the preceding claims, **characterised in that** the at least one blower (58, 60), preferably two blowers (58, 60), convey(s) air from the discharge air connection (19) to the outgoing air connection (20), optionally passing it through the heat exchanger (15), and from the outside air connection (16) to the ingoing air connection (17, 18), optionally passing it through the heat exchanger (15).

6. The ventilation device according to any one of the preceding claims, **characterised in that** the at least some of the air connections (90) are arranged in a row relative to one another on the side wall (33).

7. The ventilation device at least according to claim 3, **characterised in that** the at least some of the air connections (90) are arranged on one and the same side wall portion (36, 37, 38, 39).

8. The ventilation device at least according to claim 3, **characterised in that** at least one of the side wall portions (36, 37, 38, 39) extends in an angle on at least one of its portion ends (69, 70), the angled portion (71, 72) thereby formed being an angled wall (73, 74).

9. The ventilation device according to claim 8, **characterised in that** at least one of the at least some of the air connections (90) is arranged on the angled wall (73, 74).

10. The ventilation device according to any one of the preceding claims, **characterised in that** the housing (14) has an essentially cuboid configuration.

11. The ventilation device according to any one of the preceding claims, **characterised in that** the housing (14) is a flat housing, in particular a flat cuboid housing.

12. The ventilation device at least according to claim 3, **characterised in that** the side wall portion (36, 37, 38, 39) that is provided with at least some air connections (90) forms a flat side portion (41, 42, 43, 44) of the flat side (40), in particular a flat front face (45, 46) of the housing (14).

13. The ventilation device at least according to claim 3, **characterised in that** the housing (14), in particular the flat housing, preferably the flat cuboid housing, has a trapezoidal ground plan portion, due to the angled walls (73, 74) formed by at least one of the side wall portions (36, 37, 38, 39) on both portion ends (69, 70).

14. The ventilation device according to claim 13, **characterised in that** both air connections (90) of the other type of air are arranged on both angled walls (73, 74) of the side wall portions (36, 37, 38, 39), and **in that** the air connection (90) of the one type of air is arranged on a side wall part (75) of the side wall portion (36, 37, 38, 39) that is situated between both angled walls (73, 74).

15. The ventilation device according to any one of the preceding claims, **characterised in that** the central axes (76) on the connection side of the connection pieces of at least some of the air connection pieces (67) are parallel or essentially parallel to one another.

16. The ventilation device according to any one of the preceding claims, **characterised in that** the heat exchanger (15) effects a heat exchange between the two air pathways (54, 55).

17. The ventilation device according to any one of the preceding claims, **characterised in that**, in order to selectively bypass the heat exchanger (15), the first or the second air pathway (54, 55) is provided with a bypass (64) bypassing the heat exchanger (15).

18. The ventilation device according to claim 17, **characterised in that** the bypass (64) has a bypass air pathway (65) that crosses, in particular tunnels under, the first air pathway (54).

19. The ventilation device according to claim 18, **characterised in that** the air channel (63) and the bypass air pathway (65) are formed as a common air route (77), in particular a common tunnel (78) under the first air pathway (54).

## Revendications

1. Appareil d'aération avec récupération de chaleur, avec un boîtier (14), dans lequel est disposé un échangeur de chaleur (15) pour le transport d'air au moyen d'au moins un ventilateur (58, 60) disposé dans le boîtier (14), le boîtier (14) présentant une paroi avant (31), une paroi arrière (32) et une paroi latérale (33) et des raccordements d'air (90) pour différents types d'air, à savoir air d'alimentation, air d'évacuation, air d'échappement et air extérieur, le raccordement d'air (90) pour l'air d'alimentation étant un raccordement d'air d'alimentation (17, 18), le raccordement d'air (90) pour l'air d'évacuation étant un raccordement d'air d'évacuation (19), le raccordement d'air (90) pour l'air d'échappement étant un raccordement d'air d'échappement (20) et le raccordement d'air (90) pour l'air extérieur étant un raccordement d'air extérieur (16), d'au moins certains des raccordements d'air (90) étant disposés sur la paroi latérale (33) de telle manière qu'un raccordement d'air (90) d'un premier type d'air est situé entre au moins deux raccordements d'air (90) d'un second type d'air, le raccordement d'air (90) du premier type d'air étant le raccordement d'air d'évacuation (19) et les raccordements d'air (90) du second type d'air étant les raccordements d'air d'alimentation (17, 18), le raccordement d'air (90) du premier type d'air présentant une tubulure de raccordement d'air droite (67) et les deux raccordements d'air (90) du second type d'air respectivement présentant une tubulure de raccordement d'air (67) arquée ou angulaire qui peut être tournée ou montée dans une position angulaire souhaitée, un premier chemin d'air (54) qui s'étend à travers l'échangeur de chaleur (15) étant formé dans le boîtier (14), le premier chemin d'air reliant le raccordement d'air d'évacuation (19) avec le raccordement d'air d'échappement (20), et un second chemin d'air (55) qui s'étend à travers l'échangeur de chaleur (15) étant formé dans le boîtier (14), le second chemin d'air reliant le raccordement d'air extérieur (16) avec un des raccordements d'air d'alimentation (17, 18), un branchement d'air (56) du second chemin d'air (55) dans le boîtier (14) menant à l'autre des raccordements d'alimentation d'air (18, 17), et le branchement d'air (56) ayant un conduit d'air (63) croisant le premier chemin d'air (54).

2. Appareil d'aération selon la revendication 1, **caractérisé en ce que** la paroi latérale (33) est une paroi latérale (33) circonférentielle, notamment un côté plat (40) du boîtier (14).

3. Appareil d'aération selon l'une quelconque des revendications précédentes, **caractérisé en ce que** la paroi latérale (33) a plusieurs parties de paroi latérale (36, 37, 38, 39), où les parties de paroi latérale (36, 37, 38, 39) contiguës s'étendent de préférence avec un angle, ou de préférence avec un angle respectif, les unes vers les autres.

4. Appareil d'aération selon l'une quelconque des revendications précédentes, **caractérisé en ce que** l'au moins un ventilateur (58, 60) est disposé dans le boîtier (14).

5. Appareil d'aération selon l'une quelconque des revendications précédentes, **caractérisé en ce que** l'au moins un ventilateur (58, 60), de préférence deux ventilateurs (58, 60), transporte(nt) l'air à partir du raccordement d'air d'évacuation (19) vers le raccordement d'air d'échappement (20), le cas échéant en passant l'échangeur de chaleur (15), et à partir du raccordement d'air extérieur (16) vers le raccordement d'air d'alimentation (17, 18), le cas échéant en passant l'échangeur de chaleur (15).

6. Appareil d'aération selon l'une quelconque des revendications précédentes, **caractérisé en ce que** les au moins certains des raccordements d'air (90) sont disposés sur la paroi latérale (33) de manière affilée.

7. Appareil d'aération au moins selon la revendication 3, **caractérisé en ce que** les au moins certains des raccordements d'air (90) sont disposés sur la même partie de paroi latérale (36, 37, 38, 39).

8. Appareil d'aération au moins selon la revendication 3, **caractérisé en ce que** d'au moins une des parties de paroi latérale (36, 37, 38, 39) s'étend avec un angle au moins sur une de ses deux extrémités de partie (69, 70), la partie angulaire (71, 72) ainsi formée étant une paroi angulaire (73, 74).

9. Appareil d'aération selon la revendication 8, **caractérisé en ce que** d'au moins un des au moins certains des raccordements d'air (90) est disposé sur la paroi angulaire (73, 74).

10. Appareil d'aération selon l'une quelconque des revendications précédentes, **caractérisé en ce que** le boîtier (14) a une forme sensiblement parallélépipédique.

11. Appareil d'aération selon l'une quelconque des revendications précédentes, **caractérisé en ce que** le boîtier (14) est un boîtier plat, notamment un boîtier plat parallélépipédique.

12. Appareil d'aération au moins selon la revendication 3, **caractérisé en ce que** la partie de paroi latérale (36, 37, 38, 39) avec au moins certains des raccordements d'air (90) forme une partie de côté plat (41, 42, 43, 44) du côté plat (40), notamment un côté frontal plat (45, 46) du boîtier (14).

13. Appareil d'aération au moins selon la revendication 3, **caractérisé en ce que** le boîtier (14), notamment le boîtier plat, de préférence le boîtier plat parallélépipédique, présente une partie trapézoïdale de plan horizontal à cause des parois angulaires (73, 74) formées sur les deux extrémités de partie (69, 70) par au moins une des parties de paroi latérale (36, 37, 38, 39).

14. Appareil d'aération selon la revendication 13, **caractérisé en ce que** les deux raccordements d'air (90) de l'autre type d'air sont disposés sur les deux parois angulaires (73, 74) de la partie de paroi latérale (36, 37, 38, 39), et **en ce que** le raccordement d'air (90) de l'un type d'air est disposé sur une part de paroi latérale (75) de la portion de paroi latérale (36, 37, 38, 39) qui est située entre les deux parois angulaires (73, 74).

15. Appareil d'aération selon l'une quelconque des revendications précédentes, **caractérisé en ce que** les axes centraux (76) de tubulure à côté du raccordement d'au moins certaines des tubulures de raccordement d'air (67) sont parallèles ou sensiblement parallèles.

16. Appareil d'aération selon l'une quelconque des revendications précédentes, **caractérisé en ce que** l'échangeur de chaleur (15) effectue un échange de chaleur entre les deux chemins d'air (54, 55).

17. Appareil d'aération selon l'une quelconque des revendications précédentes, **caractérisé en ce que** le premier ou le second chemin d'air (54, 55) est muni d'une dérivation (64) autour l'échangeur de chaleur (15) pour sélectivement contourner l'échangeur de chaleur (15).

18. Appareil d'aération selon la revendication 17, **caractérisé en ce que** la dérivation (64) présente un chemin de dérivation d'air (65) qui croise, notamment passe sous, le premier chemin d'air (54).

19. Appareil d'aération selon la revendication 18, **caractérisé en ce que** le conduit d'air (63) et le chemin de dérivation d'air (65) sont configurés sous forme d'un guidage commun d'air (77), notamment d'un sous-passage commun (78) sous le premier chemin d'air (54).
